(19) Europäisches Patentamt
European Patent Office
Office européen des brevets

(11) **EP 2 300 889 B1**

(12) **FASCICULE DE BREVET EUROPEEN**

(45) Date de publication et mention
de la délivrance du brevet:
**16.11.2011 Bulletin 2011/46**

(21) Numéro de dépôt: **09797573.4**

(22) Date de dépôt: **18.06.2009**

(51) Int Cl.:
*G05D 1/02* *(2006.01)*

(86) Numéro de dépôt international:
**PCT/FR2009/051161**

(87) Numéro de publication internationale:
**WO 2010/007278 (21.01.2010 Gazette 2010/03)**

(54) **PROCÉDÉ DE GUIDAGE D'UN VÉHICULE**

VERFAHREN ZUM FÜHREN EINES FAHRZEUGS

METHOD OF GUIDING A VEHICLE

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **23.06.2008 FR 0803504**

(43) Date de publication de la demande:
**30.03.2011 Bulletin 2011/13**

(73) Titulaires:
• **Société Plymouth Française
69320 Feyzin (FR)**
• **Aperam Alloys Imphy
93200 Saint Denis (FR)**

(72) Inventeurs:
• **ARNAUD, Daniel
F-42100 Saint Etienne (FR)**
• **REYAL, Jean-Pierre
F-95610 Eragny (FR)**

(74) Mandataire: **Maureau, Philippe et al
Cabinet GERMAIN & MAUREAU
12, rue Boileau
B.P. 6153
69466 Lyon Cedex 06 (FR)**

(56) Documents cités:
**DE-A1- 3 726 212     US-A1- 2003 106 731
US-B1- 6 671 592**

EP 2 300 889 B1

## Description

L'invention concerne un procédé de guidage d'un véhicule.

Le guidage automatique de véhicule concerne différents domaines techniques. En effet, celui-ci peut être notamment appliqué au guidage d'une automobile ou d'un engin de voirie tel qu'un chasse-neige, ou encore au guidage d'un chariot de manutention.

Dans le cas des chasse-neige en particulier, il est intéressant de pouvoir guider ces derniers avec précision étant donné que les repères habituels tels que les bandes continues ou discontinues équipant généralement une chaussée ne sont pas visibles lorsqu'ils sont recouverts par la neige. Un tel procédé de guidage trouve une application particulière dans le cas du guidage de chasse-neige sur des pistes d'aéroport.

Un tel guidage du véhicule permet, suivant le domaine d'application, d'assister voire de remplacer un opérateur ou un conducteur.

Un procédé connu de guidage de véhicule est décrit dans chacun des documents US 4 800 978 et DE 37 26 212. Un tel procédé comporte les étapes consistant à :

- exciter, lors du déplacement du véhicule, au moins un élément de guidage en matériau magnétique apposé sur un support, tel qu'une route, par l'intermédiaire de moyens d'excitation,
- détecter le signal issu de l'élément de guidage suite à l'excitation par l'intermédiaire de moyens de détection,
- recueillir et traiter le signal issu des moyens de détection afin de guider le véhicule.

La mise en place d'un tel système ne permet pas de s'affranchir complètement des éléments conducteurs parasites présents dans le sol ou situés aux alentours de l'élément de guidage.

En effet, lors de l'émission d'une onde électromagnétique par les moyens d'excitation, les éléments conducteurs situés à proximité de l'élément de guidage renvoient également une onde de fréquence fondamentale, interagissant avec celle émise par l'élément de guidage.

Il est alors difficile de séparer les signaux émis par l'élément de guidage de ceux émis par les éléments parasites, ce qui affecte la qualité de la détection, et donc la précision ou la fiabilité du guidage.

L'invention vise à remédier à ces inconvénients en proposant un procédé permettant un guidage précis et fiable d'un véhicule.

A cet effet, l'invention concerne un procédé de guidage d'un véhicule comportant les étapes suivantes :

- exciter, lors du déplacement du véhicule, au moins un élément de guidage en matériau magnétique à haute perméabilité apposé sur un support, tel qu'une route, par l'intermédiaire de moyens d'excitation,
- détecter le signal issu de l'élément de guidage suite à l'excitation par l'intermédiaire de moyens de détection,
- recueillir et traiter le signal issu des moyens de détection afin de guider le véhicule, **caractérisé en ce que** l'excitation de l'élément de guidage est réalisée de manière à saturer ou modifier le point de fonctionnement de l'élément de guidage dans son cycle de fonctionnement, qui émet alors un signal riche en fréquences, composé d'une onde de fréquence fondamentale ainsi que d'ondes de fréquences multiples de la valeur de la fréquence fondamentale, appelées harmoniques et en ce que l'excitation est réalisée par l'intermédiaire d'une pluralité de bobines d'émission ou d'un radar générant un champ magnétique d'excitation tournant.

Le terme « multiples » ne doit pas être entendu au sens strict. Ainsi une onde de fréquence multiple peut par exemple être une onde dont la fréquence est proche du double de la fréquence fondamentale, mais non exactement égale à cette valeur.

Un tel système permet de s'affranchir des éléments parasites, généralement conducteurs, enfouis dans le sol ou présents aux alentours de l'élément de guidage.

L'identification d'ondes harmoniques correspondant à une onde fondamentale permet d'identifier et de séparer les signaux émis par les éléments conducteurs parasites et ceux émis par l'élément de guidage.

Avantageusement, le signal issu de l'élément de guidage est détecté par l'intermédiaire d'au moins une bobine de réception accordée à la fréquence de l'une ou plusieurs des harmoniques émises par l'élément de guidage.

Selon une possibilité de l'invention, les éléments de guidage excités sont réalisés, au moins en partie, dans un matériau présentant une perméabilité relative supérieure à 10 000 et de préférence supérieure à 100 000,

Ce type d'éléments de guidage peut être saturé à l'aide d'une onde électromagnétique d'énergie faible. La possibilité d'utiliser une faible énergie d'excitation pour obtenir une réponse fiable augmente alors la portabilité du système de guidage comprenant les moyens d'excitation et les moyens de détection.

En outre, les éléments parasites magnétiques présents dans le sol, qui sont en nombre réduits par comparaison avec les éléments conducteurs, sont difficilement saturables.

Ainsi, si une onde de faible énergie est émise, seuls les éléments de guidage émettront une réponse sous forme d'ondes identifiables.

Préférentiellement, les éléments de guidage excités sont réalisés, au moins en partie, en matériau nanocristallin.

D'autres types d'éléments magnétiques à haute perméabilité relative peuvent être utilisés, préférentiellement lorsqu'ils se présentent sous la forme d'une bande d'épaisseur d'environ 30 microns.

Les alliages nanocristallins sont des alliages de composition de type $(Fe_{74,5}Si_{13,5}B9Nb_3,Cu_x)$ fabriqués par trempe rapide sur une roue tournant à grande vitesse, ou encore des alliages du type FeZrBCu ou tout type d'alliage de propriétés voisines.

Selon une caractéristique de l'invention, les moyens d'excitation et les moyens de détection sont disposés sur le véhicule, à une distance supérieure à 20 cm de l'élément de guidage, de préférence supérieure à 40 cm, voire supérieure à 60 cm, et de façon plus particulièrement préférée supérieure à 80 cm, voire supérieure à 1 m.

Compte tenu de la fiabilité de la lecture, il est possible d'augmenter la distance entre le système de détection, comprenant les moyens d'excitation et les moyens de détection, et le support muni de l'élément de guidage. Une telle distance permet d'éviter de détériorer le système de détection en cas d'obstacles ou d'irrégularités au niveau de la surface du support.

Selon une possibilité de l'invention, les éléments de guidage sont dimensionnés de manière à générer, lors de leur excitation, un champ magnétique de symétrie axiale.

Préférentiellement, une pluralité d'éléments de guidage est apposée sur le support, le long d'un trajet à suivre par le véhicule.

Selon une caractéristique de l'invention, les éléments de guidage sont agencés de manière à former un code représentatif d'un événement, par exemple la présence d'un obstacle, ledit code étant détecté lors du déplacement du véhicule.

De toute façon, l'invention sera bien comprise à l'aide de la description qui suit, en référence au dessin schématique annexé représentant, à titre d'exemples non limitatifs, plusieurs formes d'exécution de ce procédé de guidage.

Figure 1 est une vue schématique d'un véhicule équipé d'un système de détection selon l'invention, mobile sur une route ;

Figure 2 est une vue schématique représentant le positionnement des bobines ou des capteurs de magnétomètres d'un système de détection ne faisant pas partie de l'invention;

Figure 3 est un schéma bloc représentant la structure des moyens d'émission du système de détection de la figure 2 ;

Figure 4 est un schéma bloc représentant la structure des moyens de détection du système de détection de la figure 1 ;

Figure 5 à 7 représente une route équipée d'éléments de guidage formant un code représentatif d'un évènement.

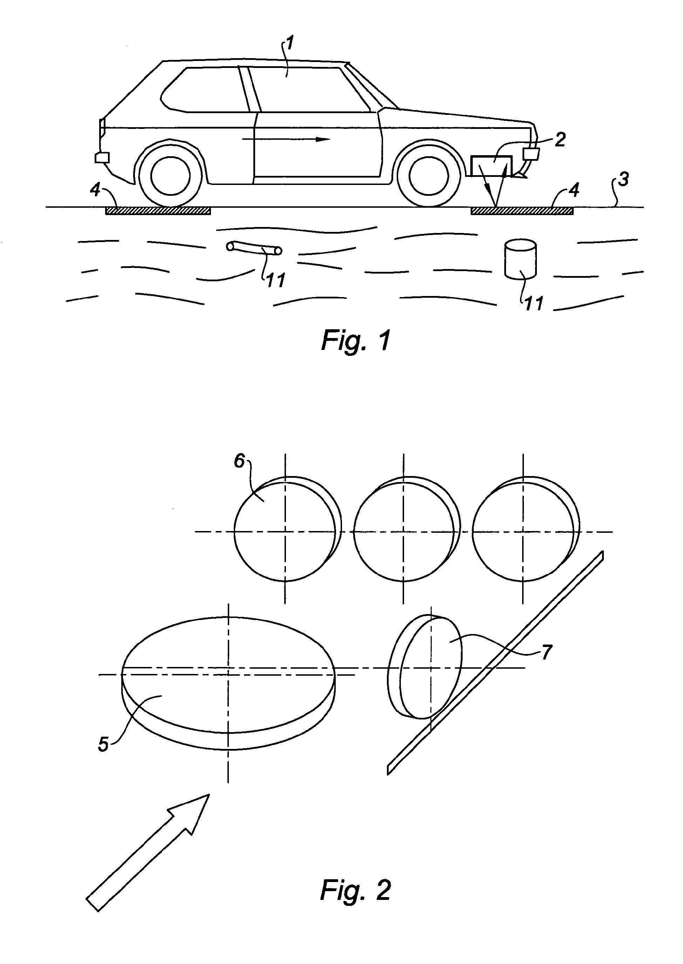

La figure 1 représente un véhicule 1 équipé d'un système de détection 2, en mouvement sur une route 3.

Des éléments de guidage 4 se présentant sous la forme d'étiquettes allongées sont disposés directement sous ou sur la surface de la route 3. Les éléments de guidage 4 sont espacés les uns des autres d'une distance d'au moins un mètre et sont réalisés en matériau nanocristallin. Ce type de matériau présente une perméabilité élevée, supérieure à 10 000. Les éléments de guidage 4 sont protégés de la corrosion, par exemple par enrobage entre deux feuilles de polyéthylène, et présentent une épaisseur réduite, de l'ordre de 25 μm, ainsi des dimensions de l'ordre de 500 x 30 mm. Le rapport de la section divisée par la longueur est choisi de telle manière que le champ démagnétisant du matériau soit suffisamment faible pour ne pas s'opposer à l'aimantation des bandelettes.

Il est également possible d'utiliser un élément de guidage sous forme d'une bande continue.

Le système de détection 2 est embarqué dans le véhicule 1 et comporte des moyens d'excitation des éléments de guidage 4, générant une onde électromagnétique dont l'intensité permet de saturer ou modifier le point de fonctionnement des éléments de guidage dans leur cycle de fonctionnement, qui émet alors un signal riche en fréquences, composé d'une onde de fréquence fondamentale ainsi que d'ondes de fréquences multiples de la valeur de la fréquence fondamentale, appelées harmoniques. Plus particulièrement, l'onde électromagnétique sature alternativement le matériau magnétique et génère ainsi des harmoniques.

Le système de détection 2 comporte en outre des moyens de détection, aptes à détecter le signal émis par les éléments de guidage, et des moyens de traitement du signal, permettant de recueillir et de traiter le signal issu des moyens de détection afin de guider le véhicule.

La structure d'un système de détection ne faisant pas partie de l'invention est représentée schématiquement à la figure 2.

Comme cela apparaît sur cette figure, les moyens d'excitation comportent une bobine d'émission 5 parcourue par un courant alternatif à une fréquence $f_0$, qui est la fréquence fondamentale d'excitation des éléments de guidage 4. La bobine d'excitation est placée sur le véhicule 1, à une distance de l'ordre de 1 mètre par rapport la surface de la route 3.

Les dimensions des éléments de guidage 4 sont ajustées de manière à limiter l'influence du champ démagnétisant. Le champ démagnétisant résulte des caractéristiques géométriques de chaque élément de guidage et s'oppose à l'influence d'un champ magnétique d'excitation extérieure.

En réponse à l'excitation des éléments de guidage 4 par la bobine d'émission 5, chaque élément de guidage se comporte alors comme une antenne qui émet des ondes électromagnétiques composées de la fréquence fondamentale $f_0$ ainsi que des fréquences harmoniques $2 f_0$, $3 f_0$, $n f_0$

La fréquence d'émission $f_0$ est, selon une pos-

sibilité de l'invention, comprise entre 5 et 50 kHz, préférentiellement de l'ordre de 10 kHz.

Afin de réduire la puissance d'émission sans réduire le niveau du courant d'émission permettant la saturation, le signal d'excitation est émis sous forme d'impulsions composées d'une sinusoïde de fréquence $f_0$ découpée par des créneaux. Le nombre de périodes de la sinusoïde est typiquement de l'ordre de 200 périodes par demi-période des créneaux. Le nombre de périodes ainsi que la puissance d'émission sont ajustables.

Les créneaux sont composés de signaux carrés variant entre les deux niveaux 0 et 1 et de période multiple de la période du signal sinusoïdal de fréquence $f_0$. La durée du niveau 1 permet d'ajuster la puissance d'émission.

Le système de détection selon l'invention diffère de celui représenté sur la figure 2 en ce que les moyens d'excitation comportent une pluralité de bobines d'émission ou un radar générant un champ magnétique d'excitation tournant.

Les moyens de détection comportent en outre des bobines de réception 6,7.

Les bobines de réception 6, 7, sont placées dans des zones appelées « zones d'ombre » et sont accordées sur les fréquences multiples de la fréquence d'excitation $f_0$ (harmoniques), de manière à détecter le champ magnétique émis par chaque élément de guidage.

Une zone d'ombre est définie comme étant la région où le flux total du champ magnétique généré par la ou chaque bobine d'émission dans la bobine de réception est très faible, voire nul en absence de cible.

Dans le cas de bobines de réception, on constate que les bobines sont sensibles préférentiellement au champ émis par les éléments de guidage ou languettes 4 qui leur sont orthogonales, et peu sensibles aux champs émis par les languettes qui sont parallèles au plan de la bobine de la réception 6, 7.

La présence des harmoniques dans le signal émis par les languettes est due au caractère non linéaire du champ créé par le matériau magnétique utilisé. Les fréquences utilisées par le détecteur sont, dans le cas décrit ci-après, la deuxième ($2 f_0$) et la troisième harmonique ($3 f_0$) du signal d'excitation. D'autres harmoniques peuvent bien sûr être utilisées.

En plus de la caractéristique non linéaire des éléments de guidage magnétiques 4, le système de détection 2 exploite également la géométrie du matériau magnétique utilisé, qui se traduit par une direction longitudinale d'aimantation préférentielle. Cette caractéristique, permet d'utiliser, en plus de la position de l'élément de guidage 4, son orientation par rapport au sens du déplacement des bobines de réception 6, 7.

De ce fait, on distingue deux types de bobines de réception.

Le premier type est constitué par la ou les bobines 7 dont les faces sont parallèles au déplacement du véhicule 1, indiqué par la flèche. Les bobines de ce type sont sensibles aux éléments de guidage 4 disposés dans le sens perpendiculaire au déplacement. Ces bobines 7 sont dénommées « bobines transversales ».

Le second type est constitué par la ou les bobines 6 dont les faces sont orthogonales au déplacement du véhicule. Contrairement aux bobines transversales 7, ces bobines 6 sont plutôt sensibles aux éléments 4 disposés dans le sens du déplacement du véhicule 1. Ces bobines 6 sont dénommées « bobines longitudinales ».

Plus particulièrement, les moyens de détection peuvent comporter plusieurs bobines longitudinales 6 disposées côte à côte, dont l'utilisation permet d'une part l'identification et le suivi d'éléments de guidage 4 agencés sous la forme d'un circuit à suivre ou fil d'Ariane, et l'amélioration de la fiabilité du détecteur face à d'éventuels éléments perturbateurs présents dans le sol.

De même que précédemment, les bobines de réception 6, 7 sont disposées à une distance de l'ordre de 1 m par rapport à la surface de la route 3.

Selon une autre possibilité de l'invention, les bobines de réception peuvent être remplacées par des magnétomètres.

Les signaux issus des différentes bobines 6, 7 sont traités à l'aide de moyens de traitement.

Ces derniers sont associés à des moyens de mesure du déplacement du véhicule 1, permettant la mesure de la vitesse et/ou de la distance parcourue. Les véhicules sont classiquement équipés de tels moyens, de sorte qu'il est possible de récupérer de telles informations pour les traiter afin de guider le véhicule, sans nécessiter l'utilisation de moyens additionnels.

Les moyens de traitement du signal issu des bobines de réception 6, 7 comportent un filtre passe haut permettant de rejeter la fréquence fondamentale $f_0$.

Le rejet de la fréquence fondamentale $f_0$ permet de réduire la perturbation induite par la ou chaque bobine d'émission 5 sur la mesure du signal émis par les éléments de guidage 4, vers les bobines de réception 6, 7.

Un tel filtrage permet également de pouvoir discriminer les signaux issus des éléments de guidage 4 de ceux issus d'éléments parasites conducteurs 11 enfouis dans le sol, à proximité des éléments de guidage 4.

A la sortie du filtre précédent, les signaux correspondant aux harmoniques sont amplifiés avant d'être traités.

Dans ce cas, deux méthodes de traitement du signal sont utilisables, à savoir une première méthode d'échantillonnage des signaux émis par les éléments de guidage 4 et reçu par les bobines de réception 6, 7, et une seconde méthode de comparaison des signaux analogiques reçus par les bobines de réception 6, 7.

Dans le cas de la première méthode, à savoir l'échantillonnage des signaux émis par les éléments de guidage, les signaux issu de l'étage d'amplification sont acquis par l'intermédiaire d'une carte d'acquisition, puis échantillonnés à une fréquence élevée afin d'assurer une bonne représentation des signaux acquis.

Les signaux issus de chacune des bobines de réception 6, 7 et/ou d'émission 5 sont synchronisés.

Les signaux issus des bobines de réception 6, 7 sont ensuite comparés et les écarts sont évalués.

Lorsque les signaux reçus par les bobines de réception longitudinales 6 disposées de manière symétriques par rapport aux éléments de guidage 4 sont égaux, il peut en être déduit que le véhicule 1 est centré sur les éléments de guidage.

Si l'écart entre les signaux des bobines de réception longitudinales 6 est négatif, ou positif, cela signifie le véhicule 1 s'écarte de la direction assignée. L'homme de l'art sait alors traiter les informations et corriger le changement de direction du véhicule.

Dans le cas de la seconde méthode, à savoir le traitement analogique des signaux, les signaux issus de chaque bobine 6, 7 ayant été traités par filtrage sont des signaux analogiques. Il est alors possible de comparer directement les signaux analogiques, sans traitement d'échantillonnage préalable.

De cette manière, il est possible de comparer le flux moyen émis par les éléments de guidage 4 dans les bobines qui lui sont orthogonales et en déduire la position du véhicule 1 par rapport auxdits éléments de guidage 4. En particulier, lorsque les flux magnétiques sont égaux, cela signifie que les bobines 6 sont agencées de façon symétrique par rapport aux éléments de guidage 4 et que, en conséquence, le véhicule 1 est correctement positionné.

La source d'énergie utilisée pour le fonctionnement du système de détection est la batterie du véhicule, capable de délivrer un courant de 50 Ah environ. La puissance d'une telle batterie est suffisante pour saturer les éléments de guidage 4 magnétiques.

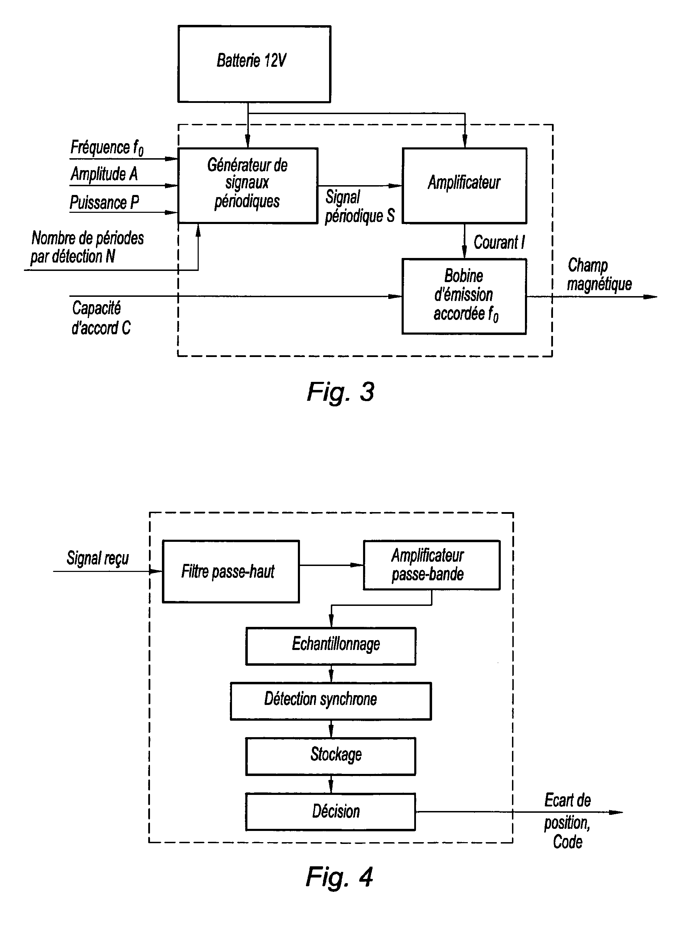

Le schéma fonctionnel des moyens d'émission du système de détection de la figure 2 est représenté à la figure 3.

Comme cela apparaît sur cette figure, la batterie alimente un générateur de signaux périodiques ainsi qu'un amplificateur. En entrée du générateur de signaux périodiques, l'opérateur peut choisir la fréquence, l'amplitude et la puissance du signal émis par la bobine correspondante 5. En sortie dudit générateur, le signal périodique crée est envoyé à l'amplificateur qui va générer un courant 1 qui, en passant dans la bobine d'émission 5 accordée à la fréquence $f_0$, génère un champ magnétique suffisant pour exciter les éléments de guidage 4.

Dans le cas présenté, le signal d'émission S est défini par la fonction suivante :

$$S(t) = A \sin(2\pi f_0 t).P(t)$$

P(t) est un signal carré à valeurs 0 et 1 exprimant la puissance émise pendant les N périodes par détection du signal d'excitation.

L'illustration porte sur le cas d'un véhicule se déplaçant à faible vitesse, par exemple à 20km/h environ.

Sur des vitesses de déplacement plus grandes, le signal sera émis à des fréquences plus élevées compatibles avec les propriétés des alliages magnétiques utilisés. Les signaux sont émis dans ce cas par un radar.

Une capacité d'accord C est agencée en série avec la bobine d'émission 5, sa valeur étant fonction de la fréquence d'émission $f_0$. La valeur C est définie de la manière suivante :

$$C = \frac{1}{L(2\pi f_0)^2}$$

L étant l'inductance de la bobine d'émission.

Dans la forme de réalisation décrite ici à titre d'exemple, le courant d'excitation a une intensité de 10 A de manière à générer un champ magnétique suffisant pour saturer les éléments de guidage 4 magnétiques.

La valeur de ce champ est de 7,2 A/m à 1 m de distance de la bobine d'émission.

Les caractéristiques de la ou chaque bobine d'émission sont les suivantes :

- Diamètre du fil de cuivre : 0,8 mm ;
- Diamètre de la bobine : 400 mm ;
- Nombre de tours : 90;
- Inductance : 7,7 mH ;
- Résistance : 3,9 Ω.

Le schéma fonctionnel des moyens de réception et de traitement du signal est représenté à la figure 4.

Comme indiqué sur cette figure, le traitement du signal reçu par les bobines de réception 6, 7 comprend les étapes suivantes:

- Filtrage de la fréquence fondamentale;
- Amplification ;
- Echantillonnage;
- Détection synchrone des fréquences harmonique 2 $f_0$ et 3 $f_0$;
- Stockage des données ;
- Comparaison avec une banque de données ;
- Décision.

Les bobines de réception 6, 7 sont similaires et présentent les caractéristiques suivantes :

- Diamètre du fil de cuivre : 0,315 mm ;
- Diamètre de la bobine : 200 mm;
- Nombre de tours : 75;
- Inductance : 2,46 mH;
- Résistance: 10,6 Ω.

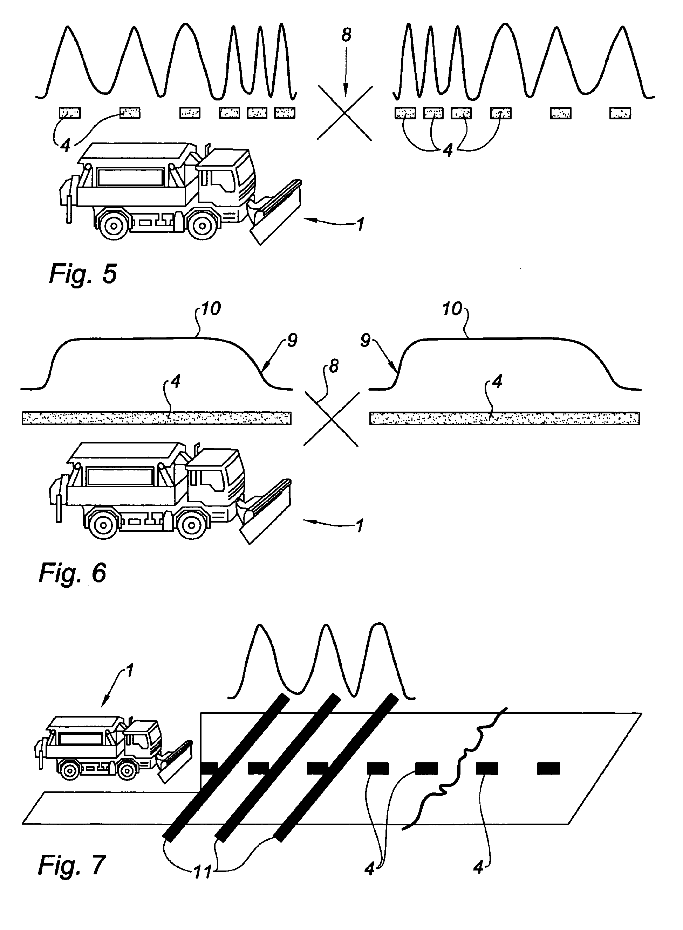

Comme cela est représenté aux figures 5 à 7, le système de détection 2 peut également être utilisé pour réaliser, outre le guidage d'un véhicule 1, la détection d'évènements tels qu'un obstacle, un croisement, une limitation de vitesse, un feu tricolore ou un panneau de signalisation.

Dans le cas où l'on dispose d'une pluralité d'éléments de guidage 4 séparés les uns des autres et agencés le long du trajet, il est possible de faire varier l'écart entre lesdits éléments à l'approche de l'évènement 8 à détecter, une telle disposition étant alors détectable à l'aide du système de détection 2.

Dans le cas où l'on dispose d'un élément de guidage 4 se présentant sous la forme d'une ligne continue, il est possible d'interrompre ladite ligne à l'approche de l'évènement 8. Il en résulte une brusque variation 9 du signal détecté 10, une telle variation étant facilement identifiable.

Il est également possible de disposer une ou plusieurs bandes 11 en matériau magnétique, transversalement par rapport à la direction de déplacement du véhicule 1. Il suffit alors d'équiper le véhicule de capteurs aptes à détecter un champ magnétique perpendiculaire au déplacement du véhicule.

Comme il va de soi, l'invention ne se limite pas aux seules formes d'exécution de ce procédé de guidage, décrites ci-dessus à titre d'exemple, mais elle embrasse au contraire toutes les variantes.

Elle concerne les véhicules au sens large, mais trouve plus particulièrement son application dans le guidage des véhicules terrestres à moteur, tels que des chasse-neige, par exemple, ou bien encore dans le guidage d'avions dans les phases de roulage au sol avant décollage et après atterrissage.

**Revendications**

1. Procédé de guidage d'un véhicule (1) comportant les étapes suivantes :

   - exciter, lors du déplacement du véhicule (1), au moins un élément de guidage (4) en matériau magnétique à haute perméabilité apposé sur un support, tel qu'une route (3), par l'intermédiaire de moyens d'excitation (5),
   - détecter le signal issu de l'élément de guidage (4) suite à l'excitation par l'intermédiaire de moyens de détection (6, 7),
   - recueillir et traiter le signal issu des moyens de détection (6, 7) afin de guider le véhicule (1),
   **caractérisé en ce que** l'excitation de l'élément de guidage (4) est réalisée de manière à saturer ou modifier le point de fonctionnement de l'élément de guidage (4) dans son cycle de fonctionnement, qui émet alors un signal riche en fréquences, composé d'une onde de fréquence fondamentale ($f_0$) ainsi que d'ondes de fréquences ($nf_0$) multiples de la valeur de la fréquence fondamentale, appelées harmoniques et **en ce que** l'excitation est réalisée par l'intermédiaire d'une pluralité de bobines d'émission ou d'un radar générant un champ magnétique d'excitation tournant.

2. Procédé de guidage selon la revendication 1, **caractérisé en ce que** le signal issu de l'élément de guidage (4) est détecté par l'intermédiaire d'au moins une bobine de réception (6, 7) accordée à la fréquence de l'une ou plusieurs des harmoniques émises par l'élément de guidage (4).

3. Procédé de guidage l'une des revendications 1 et 2, **caractérisé en ce que** les éléments de guidage (4) excités sont réalisés, au moins en partie, dans un matériau présentant une perméabilité relative supérieure à 10 000.

4. Procédé de guidage selon la revendication 3, **caractérisé en ce que** les éléments de guidage (4) excités sont réalisés, au moins en partie, en matériau nanocristallin.

5. Procédé de guidage selon l'une des revendications 1 à 4, **caractérisé en ce que** les moyens d'excitation (5) et les moyens de détection (6, 7) sont disposés sur le véhicule (1), à une distance supérieure à 20 cm de l'élément de guidage (4).

6. Procédé selon l'une des revendications 1 à 5, **caractérisé en ce que** les éléments de guidage (4) sont dimensionnés de manière à générer, lors de leur excitation, un champ magnétique de symétrie axial.

7. Procédé selon l'une des revendications 1 à 6, **caractérisé en ce qu'**une pluralité d'éléments de guidage (4) est apposée sur le support (3), le long d'un trajet à suivre par le véhicule (1).

8. Procédé selon la revendication 7, **caractérisé en ce que** les éléments de guidage (4) sont agencés de manière à former un code représentatif d'un évènement, par exemple la présence d'un obstacle, ledit code étant détecté lors du déplacement du véhicule (1).

**Claims**

1. A method for guiding a vehicle (1) including the following steps:

   - exciting, during movement of the vehicle (1), at least one guide element (4) made from a high-permeability magnetic material affixed on a substrate, such as a road (3), via excitation means (5),
   - detecting the signal coming from the guide element (4) following the excitation via detection means (6, 7),
- collecting and processing the signal coming from the detection means (6, 7) in order to guide the vehicle (1), **characterized in that** the excitation of the guiding element (4) is done so as to saturate or modify the operating point of the guide element (4) in its operating cycle, which then transmits a frequency-rich signal, made up of a fundamental frequency wave ($f_0$) as well as frequency waves ($nf_0$) that are multiples of the value of the fundamental frequency, called harmonics, and **in that** the excitation is done via a plurality of transmission coils or a radar generating a rotary excitation magnetic field.

2. The guiding method according to claim 1, **characterized in that** the signal coming from the guide element (4) is detected via at least one receiving coil (6, 7) tuned to the frequency of one or more of the harmonics transmitted by the guide element (4).

3. The guiding method according to one of claims 1 and 2, **characterized in that** the excited guide elements (4) are made, at least in part, from a material having a relative permeability greater than 10,000.

4. The guiding method according to claim 3, **characterized in that** the excited guide elements (4) are made, at least in part, from a nanocrystalline material.

5. The guiding method according to one of claims 1 to 4, **characterized in that** the excitation means (5) and the detection means (6, 7) are arranged on the vehicle (1), at a distance of more than 20 cm from the guide element (4).

6. The method according to one of claims 1 to 5, **characterized in that** the guide elements (4) are sized so as to generate an axially symmetrical magnetic field when they are excited.

7. The method according to one of claims 1 to 6, **characterized in that** a plurality of guide elements (4) are affixed on the substrate (3), along a path to be followed by the vehicle (1).

8. The method according to claim 7, **characterized in that** the guide elements (4) are arranged so as to form a code representative of an event, for example the presence of an obstacle, said code being detected during the displacement of the vehicle (1).

**Patentansprüche**

1. Verfahren zur Führung eines Fahrzeugs (1), das die folgenden Schritte umfasst:

- Erregen über Erregungsmittel (5) mindestens eines auf einem Untergrund wie zum Beispiel einem Fahrweg (3) angebrachten Führungselements (4) aus magnetischem Material mit hoher Permeabilität bei der Bewegung des Fahrzeugs (1),
- Erfassen des vom Führungselement (4) infolge der Erregung abgegebenen Signals durch Erfassungsmittel (6, 7),
- Aufnehmen und Verarbeiten des von den Erfassungsmitteln (6, 7) abgegebenen Signals, um das Fahrzeug (1) zu führen, **dadurch gekennzeichnet, dass** die Erregung des Führungselemets (4) durch Sättigung oder Veränderung des Schaltpunkts des Führungselements (4) in seinem Schaltzyklus erfolgt, das dann ein frequenzreiches Signal sendet, das aus einer Basisfrequenzwelle ($f_0$) sowie aus Frequenzwellen ($nf_0$), die dem Vielfachen des Wertes der Basisfrequenz entsprechen, Harmonische genannt, zusammengesetzt ist, und dass die Erregung über eine Vielzahl von Sendespulen oder einen Radar durchgeführt wird, der ein drehendes Erregungsmagnetfeld erzeugt.

2. Führungsverfahren nach Anspruch 1, **dadurch gekennzeichnet, dass** das vom Führungselement (4) abgegebene Signal über mindestens eine Empfangsspule (6, 7) erfasst wird, die auf die Frequenz der einen oder mehreren Harmonischen abgestimmt ist, die vom Führungselement (4) gesendet werden.

3. Führungsverfahren nach einem der Ansprüche 1 bis 2, **dadurch gekennzeichnet, dass** die erregten Führungselemente (4) zumindest teilweise aus einem Material hergestellt sind, das eine relative Permeabilität von über 10.000 aufweist.

4. Führungsverfahren nach Anspruch 3, **dadurch gekennzeichnet, dass** die erregten Führungselemente (4) zumindest teilweise aus nanokristallinem Material hergestellt sind.

5. Führungsverfahren nach einem der Ansprüche 1 bis 4, **dadurch gekennzeichnet, dass** die Erregungsmittel (5) und die Erfassungsmittel (6, 7) auf dem Fahrzeug (1) in einem Abstand von mehr als 20 cm vom Führungselement (4) angeordnet sind.

6. Verfahren nach einem der Ansprüche 1 bis 5, **dadurch gekennzeichnet, dass** die Führungselemente (4) derart bemessen sind, dass sie bei ihrer Erregung ein axial symmetrisches Magnetfeld erzeugen.

7. Verfahren nach einem der Ansprüche 1 bis 6, **da-**

**durch gekennzeichnet, dass** eine Vielzahl von Führungselementen (4) auf dem Untergrund (3) entlang einer von dem Fahrzeug (1) zu verfolgenden Strecke angeordnet ist.

8. Verfahren nach Anspruch 7, **dadurch gekennzeichnet, dass** die Führungselemente (4) derart ausgebildet sind, dass sie einen für ein Ereignis, zum Beispiel das Vorhandensein eines Hindernisses, repräsentativen Code bilden, wobei der Code bei der Bewegung des Fahrzeugs (1) erfasst wird.

Fig. 1

Fig. 2

Batterie 12V

Fréquence f₀
Amplitude A
Puissance P

Générateur de
signaux
périodiques

Signal
périodique S

Amplificateur

Courant I

Nombre de périodes
par détection N

Bobine
d'émission
accordée f₀

Champ
magnétique

Capacité
d'accord C

**Fig. 3**

Signal reçu

Filtre passe-haut

Amplificateur
passe-bande

Echantillonnage

Détection synchrone

Stockage

Décision

Ecart de
position,
Code

**Fig. 4**

**Fig. 5**

**Fig. 6**

**Fig. 7**

**RÉFÉRENCES CITÉES DANS LA DESCRIPTION**

**Documents brevets cités dans la description**

- US 4800978 A
- DE 3726212